# EUROPEAN PATENT SPECIFICATION

(11) **EP 2 085 659 B1**
(45) Date of publication and mention of the grant of the patent: **24.11.2010**
(21) Application number: 08001884.9
(22) Date of filing: 01.02.2008
(51) Int. Cl.: F16H 61/06

(54) **Automatic transmission**
Automatikgetriebe
Transmission automatique

(43) Date of publication of application: 05.08.2009
(73) Proprietor: GM Global Technology Operations, Inc., Detroit MI 48265-3 (US)
(72) Inventor: Rambert, Marc, 67000 Strasbourg (FR); Scelers, Herve, 67400 Illkirch-Graffenstaden (FR)
(74) Representative: Kraenzmer, Martin

(56) References cited:
- EP-A- 1 722 154
- US-A- 654 484
- US-A- 4 706 705
- US-A1- 2004 069 352
- US-B1- 6 443 277

## Description

The invention concerns an automatic transmission with a pressure regulator valve for the clutch pressure and a check ball connected to a rod for overpressurizing the clutch pressure placed between an actuator feed limit circuit and the back side of the pressure regulator valve.

In JP 59026648 A, a check ball valve is used in order to minimize the shock caused at the time of shifting the gear position of a transmission from its direct-coupled stage to overdrive stage.

The document US 6,443,277 B1, which is being considered as closest prior art, describes a first clutch for an automatic transmission in a hybrid drive vehicle that comprises an apply line extending from a manual valve to a clutch, with a check ball disposed in the apply line operable to move out of the apply line upon upstream fluid pressure, and an exhaust line extending from the apply line, downstream of the check ball, to an exhaust valve. A driver-triggered valve actuating means operates to close the exhaust valve when the driver selects drive with a driver shift lever and to open the exhaust valve when the driver shifts out the drive thereby releasing the clutch.

In such automatic transmissions, the valve cannot regulate anymore for a certain level of pressure, because the valve is wide open. Therefore, the clutch pressure can reach the line pressure. During a downshift phase, one clutch has to be released, but pressure spikes appear and worsen the shift quality. These oscillations are due to the closing phase of the check ball during the release phase.

The check ball is a cost saving solution in order to "boost" the clutch pressure but has to be very well understood in order to be able to control the clutch pressure during the release phase. At the beginning of the downshift phase, the valve is boosted (wide open) because there is no need to have high pressure in the clutch. The check ball is also open which means that the back pressure is identical to the actuator feed limit pressure (about 9 bars).

When the release of the clutch pressure is to be controlled, the check ball will close with a short delay depending on its dynamic properties (mass and viscous damping). This closing phase will modify the equilibrium of the regulator valve and will create pressure spikes because the flow rate through the check ball at the beginning of the release phase will stop almost instantaneously.

Upon observing the clutch pressure during downshift, it can be stated that the check ball remains open when the line pressure decreases below the actuator feed limit pressure (9 bars). However, there is no need for the check ball to be open any more because the boosting of the clutch pressure is no more necessary. The check ball is still open about two seconds after the beginning of the downshift and then closes due to the clutch pressure decrease.

It is an objective of the invention to eliminate the phase when the line pressure goes below the actuator feed pressure with maximum vbs pressure.

This objective is achieved according to the invention in that the check ball has a gain.

In order to reduce the pressure spike, the check ball has to be closed before entering in the downshift phase.

This is achieved in that the diameter of the seat of the check ball and the diameter of the rod connected to the check ball are dimensioned so that the check ball closes as soon as the line pressure goes below P_{back} = Dₛₑₐₜ² / (Dₛₑₐₜ² - D_{rod}²) x P_{actuator}.

The gain of the check ball is equal to P_{back} / P_{actuator} = Dₛₑₐₜ² / (Dₛₑₐₜ² - D_{rod}²). As soon as P_{back} is equal or higher than the gain multipied by P_{actuator}, the check ball opens.

The check ball closes as soon as the line pressure goes below P_{back} = Dₛₑₐₜ² / (Dₛₑₐₜ² - D_{rod}²) x P_{actuator}.

The advantage of the check ball arrangement according to the present invention is the fact that it will be open only during the boost phase and that it will not disturb the downshift phase. This system will not disturb any other shift manoeuvre because in other conditions the check ball will remain closed. The gain is easy to control because it depends only on the dimensions.

In the following, the invention is described in detail with reference to drawings in which
FIGURE 1 shows a view of the check ball environment,
FIGURE 2 shows a comparison of simulated results of the check ball lift with gain and without gain,
FIGURE 3 shows the characteristics of the check ball.

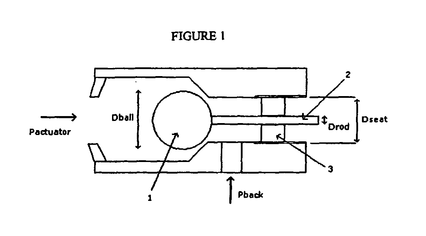

As can be seen in FIGURE 1, a check ball 1 with a diameter D_{ball} and with a rod 2 is disposed in a screwed cup 3. The rod 2 gliding an the screwed cup, the check ball 1 can move in two directions. On the front side, P_{actuatorr} acts on the check ball and on the back side P_{back}. Depending on the forces of P_{actuator} and P_{back}, the check ball closes or opens.

By varying the geometry of the check ball arrangement, a gain can be achieved. This gain depends on the diameter of the seat of the check ball 1 (Dₛₑₐₜ) and the diameter of the rod 2 (D_{rod}).

The gain of the check ball is equal to P_{back} / P_{actuator} = Dₛₑₐₜ² / (Dₛₑₐₜ² - D_{rod}²). As soon as P_{back} is equal or higher than the gain multipied by P_{actuator}, the check ball opens.

The check ball closes as soon as the line pressure goes below P_{back} = Dₛₑₐₜ² / (Dₛₑₐₜ² - D_{rod}²) x P_{actuator}.

It can be seen that the check ball closes when the line pressure decreases below the actuator feed limit pressure.

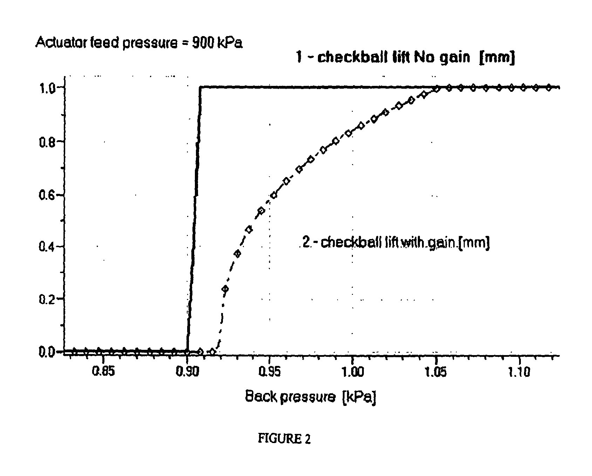

FIGURE 2 shows a comparison of simulated results of the check ball lift with garrin and without gain. It can be seen from this diagram that the check ball without gain (line 1 - checkball lift no gain) opens once the back pressure is higher than the actuator feed pressure (here 0.9 kPa). The checkball with gain (line 2- checkball lift with gain) needs a higher pressure (0.92 kPa) to open and inversely closes when the pressure falls below 0,92 kPa.

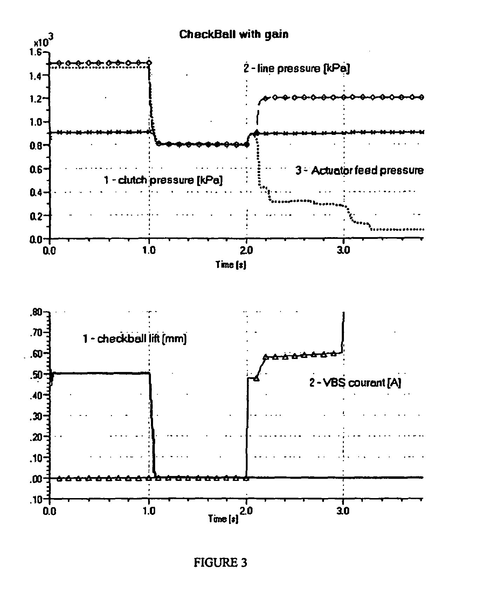

FIGURE 3 shows the characteristics of the check ball. At time 0.1 s, the valve is in boost condition, the check ball is open and the pressure behind the valve corresponds to the actuator feed pressure. At time 1.0 s, the pressure falls down, no boost is more needed, because line pressure is below the critical pressure of the boost. At time 1.2 s, the check ball closes again and will have no more impact on the behaviour of the valve. At time 2.4 s, the pressure in the clutch is controlled and no undershot is observed.

## Claims

1. Automatic transmission with a pressure regulator valve for the clutch pressure and a check ball (1) for overpres surizing the clutch pressure placed between an actuator feed limit circuit and the back side of the pressure regulator valve, wherein the check ball (1) has a gain, **characterized in that**, the check ball (1) is connected to a rod (2) and the gain of the check ball (1) is equal to P_{back} / P_{actuator} = Dₛₑₐₜ² / (Dₛₑₐₜ² - D_{rod}²), P_{actuator} being the actuator feed pressure, P_{back} being the back pressure connected to the pressure regulator valve, Dₛₑₐₜ being the diameter of the seat and D_{rod} the diameter of the rod (2).

## Patentansprüche

1. Automatikgetriebe mit einem Druckregelventil für den Kupplungsdruck und mit einem Kugelrückschlagventil (1) zur Erzeugung eines Kupplungs-Überdrucks, das zwischen einem Stellgliedspeisegrenzschalter und der Rückseite des Druckregelventils angeordnet ist, wobei das Kugelrückschlagventil (1) eine Verstärkung aufweist, **dadurch gekennzeichnet, dass** das Kugelrückschlagventil (1) mit einer Stange (2) verbunden ist und für die Verstärkung des Kugelrückschlagventils (1) P_{Rück} / P_{Stellglied} = D_{Sitz}² / (D_{Sitz}² - D_{Stange}²) gilt, wobei P_{Stellglied} der Stellgliedspeisedruck, P_{Rück} der mit dem Druckregelventil verbundene Rückschlagdruck, D_{Sitz} der Durchmesser des Sitzes und D_{Stange} der Durchmesser der Stange (2) ist.

## Revendications

1. Transmission automatique avec une soupape de régulation de la pression pour la pression de l'embrayage et une bille antiretour (1) pour surpressuriser la pression d'embrayage, placée entre un circuit de limitation d'avance de l'actionneur et l'arrière de la soupape de régulation de la pression, dans laquelle la bille antiretour (1) a un gain, **caractérisée en ce que** la bille antiretour (1) est reliée à une tige (2) et le gain de la bille antiretour (1) est égal à P_{contre}/P_{actionneur} = D_{siège}² / (D_{siège}² - D_{tige}²), P_{actionneur} étant la pression d'avance de l'actionneur, P_{contre} étant la contre-pression reliée à la soupape de régulation de pression, D_{siège} étant le diamètre du siège et D_{tige} étant le diamètre de la tige (2).
